# EUROPEAN PATENT SPECIFICATION

(11) **EP 2 116 400 B1**
(45) Date of publication and mention of the grant of the patent: **19.06.2019**
(21) Application number: 08155729.0
(22) Date of filing: 06.05.2008
(51) Int. Cl.: A01B 59/00

(54) **Process of controlling the correct connection of at least one power driven user to various power outlets**
Verfahren zur Kontrolle des richtigen Anschlusses von mindestens einem kraftbetriebenen Benutzer an verschiedene Steckdosen
Procédé de contrôle de la connexion correcte d'au moins un utilisateur automatique vers plusieurs sorties d'alimentation

(43) Date of publication of application: 11.11.2009
(73) Proprietor: Deere & Company, Moline, IL 61265 (US)
(72) Inventor: Biziorek, Stéphane, 70600, Champlitte (FR)
(74) Representative: John Deere GmbH & Co. KG

(56) References cited:
- EP-A- 1 580 043
- FR-A- 2 887 955
- US-A- 5 604 681

## Description

This invention relates to a process of controlling the correct connection of at least one power driven user to various power outlets and to an arrangement for running this process.

DE 10 2005 049 550 A1 discloses a hydraulic system of a work vehicle, like an industrial machine, whereas a tool, like a shovel, can be connected to an arm or the like. Said tool comprises a tool recognition device being capable of producing a recognition signal indicating the type of the tool connected to the work vehicle. As a consequence the hydraulic circuit acts according to the characteristics of the tool.

From US 2006/0131040 A1 it is known a configurable hydraulic system for an agricultural tractor and implement combination. A controller is used to optimize the number of outlets on selective control valves with respect to the number and kind of connections required by single- or double acting hydraulic actuators, which vary from implement to implement.

EP 1 580 043 A1 discloses a combination of a tractor vehicle and a trailed implement, having at least one sensor, which serves to generate a signal indicating the mechanical coupling state of the trailed implement. The sensor is provided on the towing device. The signal being fed to the electronic control unit and activating an immobilizer of the tractor vehicle and/or of the trailed implement as a function of the signal and of the connection state of at least one connecting line.

The problem this invention is based on is seen in the risk of a misconnection in case several users can be connected to several power outlets.

This problem is solved in an innovative way by means of the teaching of claims 1 and 4, whereas advantageous features further developing the invention are given in the dependent claims.

By means of this teaching it does not harm, if a remote user is connected to the wrong power outlet for hydraulic, pneumatic or electric power, since the controller assures, that said power is routed to the correct outlet. Insofar the system is self-teaching each time, when users are connected to it. The signal may be transmitted by wire or wireless and may be created by the user itself or by an emitter connected to the power line assigned to the user. The power source may be a single power source, like a pump, with several outlets or it may be several power sources each having one or more outlets. The user may be an electrical, hydraulic or pneumatic motor moving a component on a machine, like a shift lever, a tying system, a bale gate, a tool on a loader, a wrapping table, etc..

Using an emitter on the power line, its coupler or the like is a fast and simple way to tell the controller, which user is connected to a specific outlet. The emitter may send an electro magnetic or acoustic signal to a receiver close to the outlet. But the emitter could be a bar code as well, which is scanned by a scanner at the outlet. In addition a signal may be emitted by mechanical pins, or the like, which due to their size, combination of several pins, shape, etc. are able to tell a sensor or receiver which user they are assigned to. Preferably the signal is fed via a CAN or ISO bus from an implement, like a baler, mower, planter, loader, etc. to a tractor. Depending on the circumstances the emitter could also be located on the outlet side and the sensor could be on the user side.

According to the invention one way to create a signal is activating outlets and watching, which of the users is reacting.

Sensors may be used in a power line, which would recognize flow of power. Sensors may be used as well on the user itself, like potentiometers, reed sensors, load sensors, etc. A process based on test movements of a remote user is according to the invention another way of creating the signal, in order to find out, whether all users are working properly.

The controller may also have a memory for data about the operation of the respective user, like speed, dampening, pressure, etc. This will not only provide a b/w recognition of the respective user, but also user intelligence. Such additional operation data may also avoid conflicts, in case several users are activated simultaneously.

In order to run a self-teaching process for supplying power to the correct user an arrangement of coupling parts is provided, in which one is connected to a powered user and at least two are connected to several power outlets of a power source, whereas the part connected to the user contains an emitter for a signal representative for the user, received and used by a controller for the at least two power outlets of the power source. The emitter and the receiver may be of different types, like coded mechanic pins, acoustic or visible signals, electro magnetic or ultrawave signals.

It is proven technique to use RFID tags, bar codes, wave sensors or the like and that a reader or sensor is provided in the arrangement such, that it can read the RFID tag, etc. once the coupling parts are connected to each other. Such signal providers are simple, cheap and do not require any movement of components by the user. They recognize the kind of the user even before the user would be operated. Such tags, bar codes, etc. could be attached to the exterior of the power line as well as integrated in it, which may provide protection against mechanical stress.

While in general it would be possible to provide for a mechanical or electrical assignment of the outlets A - D to the users 28, 32, 36, an electronic and programmable computer provides more flexibility and may even be able to change the assignment during operation to apply different power supply characteristics, like pressure, flow rate, timing, etc.

Heretoafter two embodiments of the invention are described in more detail and in relation to the drawing. It is shown in:
- Fig. 1: a tractor and an implement according to a first embodiment of the invention, in which a signal is generated by activating users on the implement, which signal is fed back to a processor on the tractor,
- Fig. 2: a tractor and an implement according to a second embodiment of the invention, in which a signal is generated by an emitter on a power line, which signal is fed back to the processor on the tractor, and

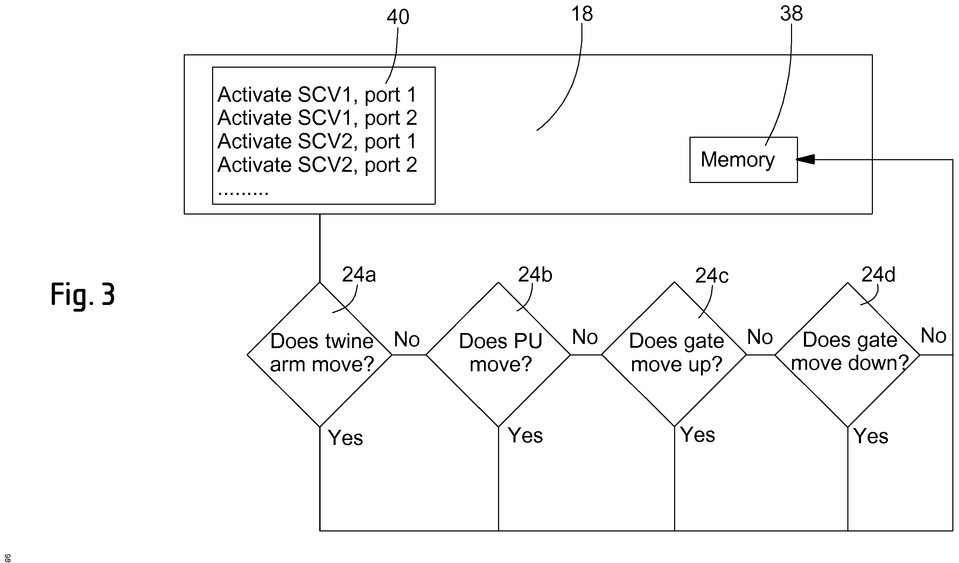

- Fig. 3: a diagnostic flow chart.

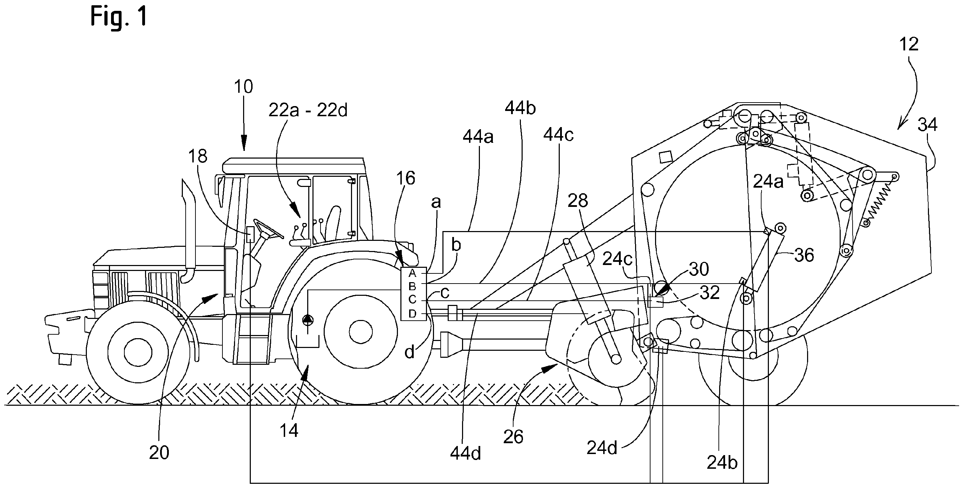

Figure 1 shows a tractor 10 and an implement 12 being operated by said tractor 10.

Instead of said tractor 10 any other kind of prime mover, like a truck, industrial machine, forestry machine, car, crane, etc. could be used. While the implement 12 is shown as an agricultural baler it also can be of any kind - hitched to the tractor 10 or attached or coupled to it or at least being operated by it. As example, it could be a front or read end loader, a seeder or planter, a sprayer, a mower, a forage harvester, a cultivator, a trailer, a wrapper, etc. etc.

Said tractor 10 is provided with a power source 14, preferably supplying hydraulic power, outlets A, B, C, D, a power outlet controller 16 and a processor 18.

The power source 14 as usual contains a pump, valves, lines, sump etc., which are useful to deliver e.g. pressurized oil to the outlets A - D. The outlets A - D usually are sockets into which plugs a, b, c, d at the end of hydraulic, pneumatic or electric power lines 44a, 44b, 44c, 44d can be inserted. Such outlets A - D may be provided as a bloc or individually. Such outlets are commonly referred to as the ports of selective control valves on tractors. While at least one outlet A - D is necessary, more than four outlets could be used as well. Allowing or avoiding flow of power through these power outlets A - D happens in the power outlet controller 16.

The power outlet controller 16 contains spools, electromagnets, etc. as this is known in the art. It has a single inlet from and outlet to the power source 14 and the outlets A - D, which all are identical and thus allow the insertion of any of the plugs a - d. The power outlet controller 16 receives signals from the processor 18, such that this specific outlet out of A - D is activated, which is connected to the user, to be operated by a given controller 22a - 22d on an operator station 20 of the tractor 10. Said controller 22a - 22d can be substantially of any type, like a lever, a switch, a touch screen, a key board or the like. A control signal could also be generated automatically by another part of this processor 18 or by another controller on the tractor 10 or on the implement and fed by a BUS system from the implement 12.

Accordingly, it will depend on the signals received by the power outlet controller 16 from the processor 18 to which outlet A - D power will be directed, rather than by a direct connecting between a controller 22a, 22b, 22c, 22d on the operator station 20 and an outlet A - D.

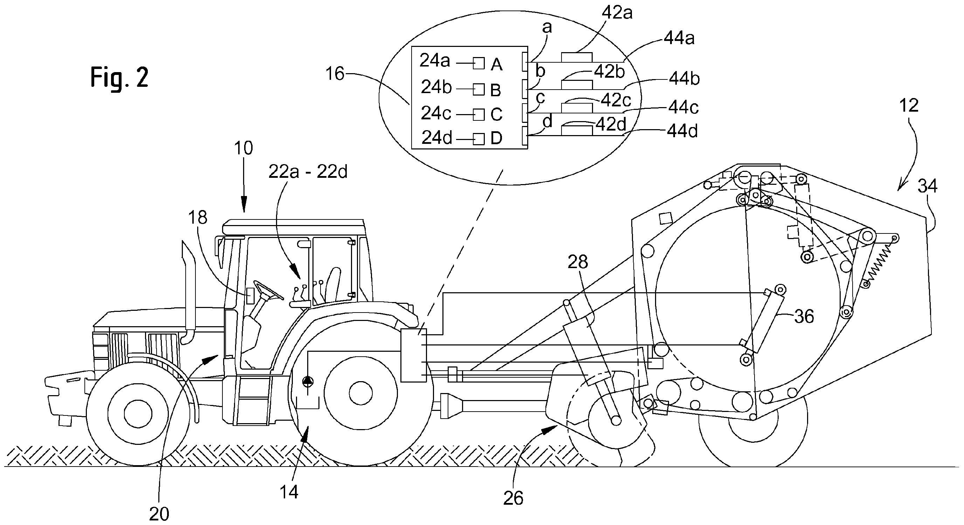

The processor 18 is located preferably on the operator's station 20 and is connected among others to the controllers 22a - 22d, to the power source controller 16 and to sensors 24a, 24 b, 24c, 24d, which according to the embodiment in figure 1 are located on the implement 12 and in the embodiment of figure 2, they are located close to the outlets A - D. Each of the sensors 24a - 24d is assigned to a component on the implement, like a pick-up 26 raised by single acting hydraulic user 28, a twine dispenser 30 moved by a single acting hydraulic user 32, and a gate 34 raised and lowered by a double acting hydraulic user 36. All users 28, 32, 36 are formed as linear hydraulic motors or cylinders in this embodiment, but could be of another type as well. The sensors 24a - 24d may be connected to the users 28, 32, 36 as such as well as to the components moved by the users 28, 32, 36. In one case they may detect a pressure, or the like, in another case a movement. In the processor 18 a memory 38 and for the embodiment of figure 1 a routine 40 are provided. It is one of the purposes of the processor 18 to receive an input signal from the actuation of one of the controllers 22 and to generate a signal corresponding to the input signal, which is useful to operate the respective user 28, 32, 36. For example, if a controller 22 is moved in order to raise the gate 34, the user 36 needs to extend, which will be accomplished by powering the respective power line 44b through activating the correct outlet A - D. The same would happen if a non shown sensor detects that a bale is produced and tied in the implement 12 and is ready to be ejected, caused by an automatic routine.

In the embodiment of figure 2 each power line 44a - 44d is provided with an emitter 42a, 42b, 42c, 42d, which contains and sends out data identifying the user 28, 32, 36 respectively the related component. For example emitter 42a indicates, that it is connected to the rod end of user 36, which will be powered in order to raise the gate 34. While in this embodiment the emitter 42a is an RFID tag, it could also be of any other kind, like a bar code, acoustic or optical waves, mechanical pins with a certain pattern, etc.

The memory 38 collects information received from sensors 24a - 24d, which indicate, which user 28, 32, 36 is connected to which of the outlets A - D until the plugs a - d are disconnected therefrom. In addition to the correct user assignments the memory 38 may also contain information helpful for the operation of the implement 12, like the gate 34 shall not be raised, when the twine dispenser 30 is activated. The memory 38 may also contain data about the operation of the respective user 28, 32, 36, like stroke speed and pressure of motor 32, moving the twine dispenser 30.

The routine 40 is applied only in the case of the embodiment in figure 1 and it is the purpose to find out, which of the users 28, 32, 36 is connected to which outlet A - D. The design of the routine 40 is such, that all controllers 22a - 22d are activated in series and after activation of one controller 22a - 22d sensors 24a - 24d are observed for emitting a signal indicating, which user 28, 32, 36 has been moved, and - where applicable - in which direction. Once all users 28, 32, 36 are assigned to all controllers 22a - 22d respective information is stored in the memory 38 and operation of the implement 12 may be started. Once a user 28, 32, 36 is identified and assigned to one of the outlets A - D, it may be skipped, when the routine is performed with the next outlet A - D.

While in this embodiment also the sensors 24a - 24d are asked for a signal in series, it would also be possible to use sensors 24a - 24d emitting a signal, which is not ON-OFF only, but identifies also the user 28, 32, 36; in such a case all sensors 24a - 24d could be checked in parallel.

## Claims

1. Process of controlling the correct connection of at least one power driven user (28, 32, 36) to various power outlets (A, B, C, D), wherein a signal indicative of the user (28, 32, 36) is emitted to a processor (18) according to which the correct power outlet (A, B, C, D) will be activated, **characterized in that** the signal is created by activating outlets (A, B, C, D) and watching, which of the users (28, 32, 36) is reacting, or the signal is created by a test movement of the user (28, 32, 36).

2. Process according to claim 1, **characterized in that** this signal is created by an emitter (42a - 42d) attached to a power line (44a, 44b, 44c, 44d) of the user (28, 32, 36) to be connected to the power outlet (A, B, C, D).

3. Process according to claim 1, **characterized in that** operation parameters for the user (28, 32, 36) identified by the signal are taken from a memory (38) in order to control the function of the user (28, 32, 36).

4. Arrangement of a tractor (10) and an implement (12) being operated by said tractor (10), said tractor (10) is provided with a power source (14), outlets (A, B, C, D), a power outlet controller (16) and a processor (18), the outlets (A, B, C, D) are sockets into which plugs (a, b, c, d) at the end of power lines (44a, 44b, 44c, 44d) can be inserted, wherein the processor (18) is connected to controllers (22a, 22b, 22c, 22d), to the power source controller (16) and to sensors (24a, 24 b, 24c, 24d), which are located on the implement (12), and each of the sensors (24a - 24d) is assigned to a power driven user (28, 32, 36), the sensors configured for emitting a signal indicative of the user (28, 32, 36) to the processor (18) according to which the correct power outlet (A, B, C, D) is activated, **characterized in that** the arrangement is configured to create the signal by activating outlets (A, B, C, D) and watching, which of the users (28, 32, 36) is reacting, or by a test movement of the user (28, 32, 36).

5. Arrangement according to claim 4, **characterized by** the processor (18) activating the user (28, 32, 36) by means of the control (22a, 22b, 22c, 22d) assigned to the function of the user (28, 32, 36), irrespective of the chosen connection of the user (28, 32, 36) to either of the power outlets (A, B, C, D).

## Patentansprüche

1. Prozess zum Steuern der richtigen Verbindung von mindestens einem strombetriebenen Nutzer (28, 32, 36) mit verschiedenen Stromsteckdosen (A, B, C, D), wobei ein den Nutzer (28, 32, 36) angebendes Signal zu einem Prozessor (18) emittiert wird, gemäß dem die richtige Stromsteckdose (A, B, C, D) aktiviert wird,
**dadurch gekennzeichnet, dass** das Signal erzeugt wird, indem Steckdosen (A, B, C, D) aktiviert werden und beobachtet wird, welcher der Nutzer (28, 32, 36) reagiert, oder das Signal durch eine Testbewegung des Nutzers (28, 32, 36) erzeugt wird.

2. Prozess nach Anspruch 1, **dadurch gekennzeichnet, dass** dieses Signal durch einen Emitter (42a - 42d) erzeugt wird, der an einer Stromleitung (44a, 44b, 44c, 44d) des Nutzers (28, 32, 36) angebracht ist, der mit der Stromsteckdose (A, B, C, D) verbunden werden soll.

3. Prozess nach Anspruch 1, **dadurch gekennzeichnet, dass** Betriebsparameter für den Nutzer (28, 32, 36), die durch das Signal identifiziert werden, aus einem Speicher (38) genommen werden, um die Funktion des Nutzers (28, 32, 36) zu steuern.

4. Anordnung eines Traktors (10) und eines Arbeitsgeräts (12), das durch den Traktor (10) betrieben wird, wobei der Traktor (10) mit einer Energiequelle (14), Steckdosen (A, B, C, D), einer Stromsteckdosensteuerung (16) und einem Prozessor (18) ausgestattet ist, wobei die Steckdosen (A, B, C, D) Buchsen sind, in die Stecker (a, b, c, d) am Ende von Stromleitungen (44a, 44b, 44c, 44d) eingeführt werden können, wobei der Prozessor (18) mit Steuerungen (22a, 22b, 22c, 22d), der Energiequellensteuerung (16) und Sensoren (24a, 24b, 24c, 24d), die sich am Arbeitsgerät (12) befinden, verbunden ist, und jeder der Sensoren (24a - 24d) einem strombetriebenen Nutzer (28, 32, 36) zugeordnet ist, wobei die Sensoren zum Emittieren eines Signals, das den Nutzer (28, 32, 36) angibt, zum Prozessor (18) ausgelegt sind, gemäß dem die richtige Stromsteckdose (A, B, C, D) aktiviert wird, **dadurch gekennzeichnet, dass** die Anordnung dazu ausgelegt ist, das Signal durch Aktivieren von Steckdosen (A, B, C, D) und Beobachten, welcher der Nutzer (28, 32, 36) reagiert, oder durch eine Testbewegung des Nutzers (28, 32, 36) zu erzeugen.

5. Anordnung nach Anspruch 4, **dadurch gekennzeichnet, dass** der Prozessor (18) den Nutzer (28, 32, 36) mittels der Steuerung (22a, 22b, 22c, 22d), die der Funktion des Nutzers (28, 32, 36) zugeordnet ist, ungeachtet der gewählten Verbindung des Nutzers (28, 32, 36) mit irgendeiner der Stromsteckdosen (A, B, C, D) aktiviert.

## Revendications

1. Procédé de contrôle du bon branchement d'au moins un utilisateur actionné par de l'énergie (28, 32, 36) sur diverses sorties d'énergie (A, B, C, D), un signal indiquant l'utilisateur (28, 32, 36) étant émis à destination d'un processeur (18) selon lequel la bonne sortie d'énergie (A, B, C, D) sera activée, le procédé étant **caractérisé en ce que** le signal est créé en activant des sorties (A, B, C, D) et en observant lequel des utilisateurs (28, 32, 36) réagit, ou le signal est créé par un mouvement test de l'utilisateur (28, 32, 36).

2. Procédé selon la revendication 1, **caractérisé en ce que** ce signal est créé par un émetteur (42a-42d) attaché à une conduite d'énergie (44a, 44b, 44c, 44d) de l'utilisateur (28, 32, 36) à brancher sur la sortie d'énergie (A, B, C, D) .

3. Procédé selon la revendication 1, **caractérisé en ce que** des paramètres de fonctionnement pour l'utilisateur (28, 32, 36) identifié par le signal sont extraits d'une mémoire (38) dans le but de contrôler la fonction de l'utilisateur (28, 32, 36).

4. Agencement d'un tracteur (10) et d'un équipement (12) dont ledit tracteur (10) assure le fonctionnement, ledit tracteur (10) étant pourvu d'une source d'énergie (14), de sorties (A, B, C, D), d'un contrôleur (16) de sorties d'énergie et d'un processeur (18), les sorties (A, B, C, D) consistant en des prises dans lesquelles sont susceptibles d'être insérées des fiches (a, b, c, d) à l'extrémité de conduites d'énergie (44a, 44b, 44c, 44d), le processeur (18) étant relié à des contrôleurs (22a, 22b, 22c, 22d), au contrôleur (16) de sources d'énergie et à des capteurs (24a, 24b, 24c, 24d), lesquels sont implantés sur l'équipement (12), et chacun des capteurs (24a-24d) étant assigné à un utilisateur actionné par de l'énergie (28, 32, 36), les capteurs étant configurés pour émettre un signal indiquant l'utilisateur (28, 32, 36) à destination du processeur (18) selon lequel la bonne sortie d'énergie (A, B, C, D) est activée, l'agencement étant **caractérisé en ce qu'**il est configuré pour créer le signal en activant des sorties (A, B, C, D) et en observant lequel des utilisateurs (28, 32, 36) réagit, ou par un mouvement test de l'utilisateur (28, 32, 36).

5. Agencement selon la revendication 4, **caractérisé en ce que** le processeur (18) active l'utilisateur (28, 32, 36) au moyen du contrôleur (22a, 22b, 22c, 22d) assigné à la fonction de l'utilisateur (28, 32, 36) indépendamment du branchement choisi de l'utilisateur (28, 32, 36) sur l'une des sorties d'énergie (A, B, C, D) .
